# EUROPEAN PATENT SPECIFICATION

(11) **EP 1 487 745 B1**
(45) Date of publication and mention of the grant of the patent: **01.02.2006**
(21) Application number: 02718503.2
(22) Date of filing: 28.03.2002
(51) Int. Cl.: C01G 28/02

(54) **PROCESS FOR THE PREPARATION OF LITHIUM HEXAFLUOROARSENATE**
VERFAHREN ZUR HERSTELLUNG VON LITHIUMHEXFLUOROARSENATE
PROCEDE DE PREPARATION D'HEXAFLUOROARSENATE DE LITHIUM

(43) Date of publication of application: 22.12.2004
(73) Proprietor: COUNCIL OF SCIENTIFIC AND INDUSTRIAL RESEARCH, New Delhi 100 001 (IN)
(72) Inventor: ANGAIAH, Subramaniam, Dept. of Ind. Chemistry, Tamil Nadu (IN); THIAGARAJAN, Vasudevan, Tamil Nadu (IN); RAMAIYER, Gangadharan, Tamil Nadu (IN); MEENAKSHISUNDARAM, Raghavan, Karaikudi 630 006, Tamil Nadu (IN)
(74) Representative: Kihn, Pierre Emile Joseph
(86) International application number: PCT/IN2002/000080
(87) International publication number: WO 2003/082744

(56) References cited:
- EP-A- 0 816 288

## Description

### Field of the invention

The present invention relates to a novel process for the preparation of lithium hexafluoro arsenate (LiAsF₆) useful as an electrolyte in nonaqueous solid state and polymer electrolyte lithium based primary and secondary batteries.

### Background of the invention

Lithium hexafluoro arsenate (LiAsF₆) is useful as an electrochemical energy producing electrolyte cell with small cation and large anion which never helps good conductivity in non conventional media like non-aqueous solvents, solid state ionic materials and polymer based electrolyte medium. The general method, available in literature deals with AsF₅, F₂ etc., which are difficult to handle. A few chemicals of the above type need sophisticated equipment to handle, operate and installation needs heavy investment. Apart from that environmentally such unfriendly chemicals need protection.

A literature survey revealed the following references:
1. Fluorine Chemistry Vol II J.H. Simons Ed. Academy Press New York, pg. 38, 1955.
2. Fluorine Chemistry Vol H.J. Emedius Ed. Academic Press New York page 76 (1955).
3. Fluorine Chemistry Vol II W.Large Ed. Academic Press New York page 12(1955).
4. P.L. Soni. Textbook of Inorganic Chemistry S. Chand & Co. Delhi page 425 (1985).

Lithium hexafluoro arsenate (LiAsF₆) prepared by other methods suffer from the following disadvantages.
1. Toxic chemicals are required for preparation.
2. Difficult to handle toxic chemicals.
3. The product contains unreacted reactants as impurity
4. Partial reactions occur.
5. Needs several equipment to avoid pollution problems.
6. It is not based as solid state reactions.

### Objects of the invention

The main object of this present invention is to provide a novel method for the preparation of lithium hexafluoro arsenate (LiAsF₆) which obviates the draw backs mentioned above.

Another object of this present invention is to provide a complete solid state single/double stage preparation or partial solid state method of preparation.

Still yet another object of this invention is to avoid costly equipments to handle obnoxious gases used for the preparation of lithium hexafluoro arsenate (LiAsF₆).

Yet still another object of this invention is to develop a single thermal procedure for the preparation of lithium hexafluoro arsenate (LiAsF₆) or an intermediate lithium hypoarsenite (LiAsO₂).

Another object of this present invention is to get the product without any side reaction or partial reaction.

### Summary of the invention

Accordingly the present invention provides a process for the preparation of lithium hexafluoro arsenate comprising contacting arsenous trioxide with a lithium source and ammonium fluoride all being in solid state and heating to obtain lithium hexafluoro arsenate.

Lithium hexafluro arsenate (LiAsF₆) is prepared by all solid state thermal or partial solid state reactions where arsenous trioxide (As₂O₃) is allowed to react with lithium hydroxide or lithium oxide or lithium carbonate or lithium nitrate in equimolar proportions under controlled thermal conditions so as to get lithium arsenite (LiAsO₂) which was allowed to react with NH₄F so as to obtain LiAsF₆. Alternatively, arsenous trioxide (As₂O₃) is mixed with LiOH or Li₂O or Li₂CO₃ and NH₄F is required proportions and the mix is heated in an electric furnace in between temperatures 150-300°C for 4 hours continuously. The resultant product was examined by X-ray for purity and identity.

In one embodiment of the invention, the lithium source is selected from the group consisting ofLiOH, Li₂O, LiNO₃ and Li₂CO₃.

In one embodiment of the invention, the process comprises two stages comprising mixing the lithium source with arsenous trioxide in equimolar proportions and heating the slowly in an electric furnace initially to 100°C and then continuously for 4 hours at a temperature in the range of 200-300°C to obtain lithium meta arsenate (LiAsO₂), reacting the lithium metaarsenite product with ammonium fluoride for about 4 hours to obtain lithium hexafluoro arsenate.

In another embodiment of the invention, lithium meta arsenate (LiAsO₂) is mixed with ammonium fluoride and heated in an electric furnace in between temperatures of 150-300°C continuously for 4 hours to obtain LiAsF₃ confirmed by X-ray analysis.

In another embodiment of the invention, the reaction is carried out in a single step process comprising mixing a lithium source selected from the group consisting of LiOH, Li₂O, Li₂CO₃ and LiNO₃ with equimolar quantity of arsenous trioxide (As₂O₃) and seven times molecular weight ammonium fluoride, heating the solid mixture in an electric furnace at a temperature in the range of 150-300°C for 4 hours to obtain the desired product.

In one embodiment of the invention, the method comprises a full solid state thermal reaction of lithium salt with arsenous trioxide (As₂O₃) and ammonium fluoride mixture in the ratio 1:1:6-9 heated in an electric furnace continuously for 4 hours at a temperature in the range of 150-300°C to obtain lithium tetrafluoro arsenate confirmed by X-ray analysis.

In an embodiment of the invention LiOH or Li₂O or Li₂CO₃ or LiNO3 is mixed with arsenous trioxide in the ratio 1:1 1 or get LiAsO₂.

In another embodiment of the invention LiAsO₂ is mixed with NH₄F in a ratio 1:6-9.

In yet another embodiment of this invention lithium salt, arseneous trioxide and NH₄F are mixed in the ratio 1:1: 6-9.

In still yet another embodiment of this invention an electric furnace is used to prepare LiAsO₂ intermediate or the fmal product LiAsF₆.

In another embodiment of this reaction all solid state or partial solid sate reaction is possible depending on the reactions envisaged for getting the end product LiASF₂.

### Brief description of the accompanying drawing

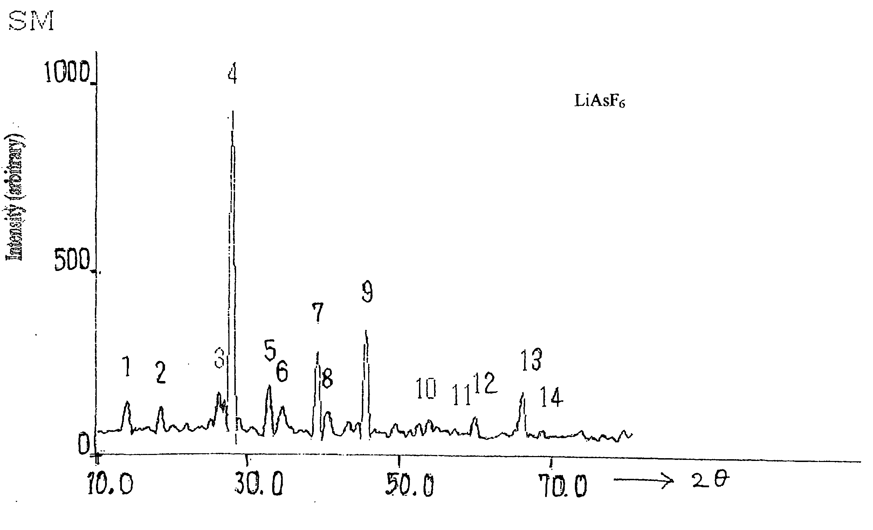

Figure 1 shows the X-ray analysis of the product lithium hexafluoro arsenate obtained by the process of the invention.

### Detailed description of the invention

The present invention provides a novel thermal solid state method for the synthesis of lithium hexafluoroarsenate either in a two step or a single step method. A lithium salt such as pure dry and AR LiOH or Li₂O or Li₂CO₃ or LiNO₃ is mixed with equimolar proportion of arseneous trioxide and heated in an electric furnace carefully at temperatures between 250-400°C for 4 hours continuously. The resultant intermediate product was mixed with six to nine times its molecular weight of ammonium fluoride (AR) and carefully heated in a muffle furnace continuously for 4 hours at a temperature in between 150-300°C to obtain LiAsF₆. The following reactions occur when As₂O₃ reacts with Li₂O or Li₂CO₃ or LiOH or LiNO₃.

### Solid state reaction

1. 2 LiOH + As₂O₃ → LiAsO₂ + H₂O

2. 2 LiNO₃ + As₂O₃ → 2 LiAsO₂ + 2NO₂ + O

3. Li₂CO₃ + As₂O₃ →2 LiAsO₂ + CO₂

4. Li₂O + As₂O₃ → LiAsO₂

LiAsF₆ can be obtained by reacting the intermediate product with 10 times its molecular weight of NH₄F. In another alternative route, the intermediate product lithium hypo arsenite reacts with 7 to 9 times the quantity of NH₄F to get LiAsF₆ product.

A mixture of LiAsO₂ and NH₄F of equimolar proportion 1:(6-9) react thermally to form LiAsF₆.

LiASO₂ + 6 NH₄F → LiAsF₆ + 2 NH₃ + H₂O + H₂

Also a mixture of As₂O₃ and lithium salt and ammonium fluoride reacts as follows

Li₂O + As₂O₃ + 12 NH₄F → 2 LiAsF₆ + 12 NH₃ + 4H₂O + 2H₂

The resultant product lithium tetrafluoro arsenate was confirmed by X-ray analysis. The reactions are preferably carried out in an electric furnace. The reaction can be either one step or two step depending on the reactions envisaged for getting the final product LiAsF₆. Pure dry AR LiOH or Li₂O or Li₂CO₃ or LiNO₃ is mixed with equimolar proportions of arseneous trioxide and heated the mixture in a electric furnace carefully in between the temperatures 250-400°C for 4 hours continuously. The resultant intermediate product was mixed with six to nine times the molecular of ammonium fluoride (AR) and the mix was carefully heated in a muffle furnace continuously for 4 hours in between temperatures 150-300°C and the resultant product LiAsF₆.

The following examples are given by way of illustration and therefore should not be construed to limit the scope of the present invention.

### Example 1

An equimolar mixture of Li₂O (AR) and As₂O₃ (AR) are ground well and then heated to 200°C in an electric furnace for 4 hours continuously. The product was ground well and was mixed with 7 times the weight of NH₄F (AR). Then this mix was again heated in an electric furnace for 4 hours continuously at a temperature of 200°C to get LiAsF₆.

| **Components** | **Composition** |
|---|---|
| Li₂O | 0.30g |
| As₂O₃ | 1.98g |
| NH₄F | 2.59g |
| Time | 4 hours |
| Temperature | 200°C |
| Nature of Product | Transparent |

Efficiency of the process > 90%

### Example 2

An equimolar mixture of LiOH (AR) and As₂O₃ (AR) are ground well and the mix heated to 200°C in an electric furnace for 4 hours continuously. The product was ground well and was mixed with 7 times the weight of NH₄F (AR). The mix was then again heated in an electric furnace for 4 hours continuously at a temperature of 200°C to get LiAsF₆.

| **Components** | **Composition** |
|---|---|
| LiOH | 0.24g |
| As₂O₃ | 1.98g |
| NH₄F | 2.59g |
| Time | 4 hours |
| Temperature | 200°C |
| Nature of the product | Transparent |

Efficiency of the process > 91 %

### Example 3

An equimolar mixture of Li₂CO₃ (AR) and As₂O₃ (AR) are ground well and the mix heated to 200°C in an electric furnace for 4 hours continuously. The product was ground well and was mixed with 7 times the weight NH₄F (AR). The mix was then again heated in an electric furnace for 4 hours continuously at a temperature of 200°C to get LiAsF₆.

| **Components** | **Composition** |
|---|---|
| Li₂CO₃ | 0.74g |
| As₂O₃ | 1.98g |
| NH₄F | 2.59g |
| Time | 4 Hours |
| Temperature | 200°C |
| Nature of the product | Transparent |

Efficiency of the process > 90%

### Example 4

An equimolar mixture of LiNO₃ (AR) and As₂O₃ (AR) are ground well and the mix heated to 200°C in an electric furnace for 4 hours continuously. The product was ground well and was mixed with 7 times the weight of NH₄F (AR) and then this mix was again heated in an electric furnace for 4 hours continuously at a temperature of 200°C to get LiAsF₆.

| **Components** | **Composition** |
|---|---|
| LiNO₃ | 0.69g |
| As₂O₃ | 1.98g |
| NH₄F | 2.59g |
| Time | 4 hours |
| Temperature | 200°C |
| Nature of product | Transparent |

Efficiency of the process > 91 %

### Example 5

AR quality of Li₂O with AR arseneous trioxide and AR NH₄F of ratios 1:1 : (6-9) are ground well to get uniform mix which was heated to 200°C to get the product LiAsF₆.

| **Components** | **Composition** |
|---|---|
| Li₂O | 0.30g |
| As₂O₃ | 1.98g |
| NH₄F | 2.59g |
| Time | 4 hours |
| Temperature | 200°C |
| Nature of the product | Transparent |

Efficiency of the process > 90%

### Example 6

AR quality of Li₂CO₃ with AR arseneous trioxide and AR NH₄F of ratios 1:1: (6-9) are ground well to get uniform mix which was heated to 200°C to get the product LiAsF₆.

| **Components** | **Composition** |
|---|---|
| Li₂CO₃ | 0.74g |
| As₂O₃ | 1.98g |
| NH₄F | 2.59g |
| Time | 4 hours |
| Temperature | 200°C |
| Nature of the product | Transparent |

Efficiency of the process > 90%

### Example 7

AR quality of LiOH with AR arseneous trioxide and AR NH₄F of ratios 1:1 : (6-9) are ground well to get uniform mix which was heated to 200°C to get the product LiAsF₆.

| **Components** | **Composition** |
|---|---|
| LiOH | 0.24g |
| As₂O₃ | 1.98g |
| NH₄F | 2.59g |
| Time | 4 hours |
| Temperature | 200°C |
| Nature of the product | Transparent |

Efficiency of the process > 90%

### Example 8

AR quality of LiNO₃ with AR arseneous trioxide and AR NH₄F of ratios 1:1: (6-9) are ground well to get uniform mix which was heated to 200°C to get the product LiAsF₆.

| **Components** | **Composition** |
|---|---|
| LiNO₃ | 0.69g |
| As₂O₃ | 1.98g |
| NH₄F | 2.59g |
| Time | 4 hours |
| Temperature | 200°C |
| Nature of the product | Transparent |

Efficiency of the process > 90%

### Conclusion

1. Lithium salts like Li₂O, Li₂CO₃, LiOH, LiNO₃ or the mixtures react with arseneous trioxide in the ratio 1:1 to get the intermediate compound LiAsO₂.
2. LiAsO₂ reacts with AR NH₄F to get LiAsF₆.
3. AR lithium salts, As₂O₃ and NH₄F (AR) in the ratio 1:1: (6-9) react to give LiAsF₆.
4. The temperature range is between 10°C to 600°C depending on the reaction processes.
5. The time of heating is in the range of 2-4 hours.

**The main advantages of the present invention are:**
1. A single step solid thermal method or a two step semi solid state reaction are possible depending on conditions of reactions.
2. Obnoxious gases and liquids like AsF₃, AsF₅, F₂ are avoided, thereby avoiding pollution problems.
3. Costly equipment to handle these gaseous materials are avoided.
4. A simple solid state/semi solid state thermal process is developed to prepare LiAsF₆.

## Claims

1. A process for the preparation of lithium hexafluoro arsenate comprising contacting arsenous trioxide with a lithium source and ammonium fluoride, all being in solid state and heating to obtain lithium hexafluoro arsenate.

2. A process as claimed in claim 1 wherein the lithium source is selected from the group consisting ofLiOH, Li₂O, LiNO₃ and Li₂CO₃.

3. A process as claimed in claim 1 wherein the process is carried out in a single step comprising mixing the lithium source with an equimolar quantity of arsenous trioxide and heating slowly in an electric furnace initially to 100°C and then continuously for 4 hours at a temperature in the range of 200-300°C to obtain lithium meta arsenate (LiAsO₂), and secondly reacting the lithium metaarsenate product with ammonium fluoride for about 4 hours to obtain lithium hexafluoro arsenate.

4. A process as claimed in claim 3 wherein the lithium source, arsenous trioxide and the ammonium fluoride are used in a ratio of 1:1:6 - 9.

5. A process as claimed in claim 1 wherein the reaction is carried out in a single thermal step comprising mixing a lithium source selected from the group consisting of LiOH, Li₂O, Li₂CO₃ and LiNO₃ with equimolar quantity of arsenous trioxide (As₂O₃) and 6 to 9 times molecular weight ammonium fluoride, heating the solid mixture in an electric furnace at a temperature in the range of 150-300°C for 4 hours to obtain the desired product.

6. A process as claimed in claim 1 wherein the lithium salt and arsenous trioxide (As₂O₃) and ammonium fluoride are mixed in a ratio 1:1:6-9, heated in an electric furnace continuously for 4 hours at a temperature in the range of 150-300°C to obtain lithium tetrafluoro arsenate confirmed by X-ray analysis.

7. A process as claimed in claim 1 wherein LiOH or Li₂O or Li₂CO₃ or LiN03 is mixed with arsenous trioxide in the ratio 1:1 to get LiAsO₂.

8. A process as claimed in claim 7 wherein the LiAsO₂ obtained is mixed with NH₄F in a ratio 1:6-9.

9. A process as claimed in claim 1 wherein an electric furnace is used to prepare LiAsO₂ intermediate or the final product LiAsF₆.

10. A process as claimed in claim 1 wherein the temperature is from room temperature to 300°C.

11. A process as claimed in claim 1 wherein in the preparation of LiAsF₆ the intermediate LiAsO₂ is prepared at a temperature in the range of 200-600°C.

12. A process for the preparation of lithium hexafluoroarsenate comprising mixing a lithium source selected from the group consisting of LiOH, Li₂O, Li₂CO₃ and LiNO₃ with equimolar quantity of arsenous trioxide (As₂O₃) and 6 to 9 times molecular weight ammonium fluoride, heating the solid mixture in an electric furnace at a temperature in the range of 150-300°C for 4 hours to obtain the desired product.

13. A process as claimed in claim 12 wherein the lithium source is selected from the group consisting of LiOH, Li₂O, LiNO₃ and Li₂CO₃.

14. A process for the preparation of lithium hexafluoroarsenate comprising first mixing a lithium source with arsenous trioxide in equimolar proportions and heating slowly in an electric furnace initially to 140°C and then continuously for 4 hours at a temperature in the range of 200-300°C to obtain lithium meta arsenate (LiAsO₂), and secondly reacting the lithium metaarsenate product with ammonium fluoride for about 4 hours to obtain lithium hexafluoro arsenate.

15. A process as claimed in claim 14 wherein the ammonium fluoride is used in an amount of 6 to 9 times the amount of arsenous trioxide.

16. A process as claimed in claim 14 wherein the lithium source is selected from the group consisting of LiOH, Li₂O, LiNO₃ and Li₂CO₃.

## Revendications

1. Procédé de préparation d'hexafluoroarseniate de lithium comprenant la mise en contact de trioxyde d'arsenic avec une source de lithium et du fluorure d'ammonium, tous étant à l'état solide et un chauffage pour obtenir de l'hexafluoroarseniate de lithium.

2. Procédé selon la revendication 1 dans lequel la source de lithium est choisie dans le groupe constitué de LiOH, de Li₂O, de LiNO₃ et de Li₂CO₃.

3. Procédé selon la revendication 1 dans lequel le procédé est effectué en une seule étape comprenant le mélange de la source de lithium avec une quantité équimolaire de trioxyde d'arsenic et le lent chauffage dans un four électrique initialement à 100°C puis en continu pendant 4 heures à une température dans la plage de 200-300°C pour obtenir du métaarseniate de lithium (LiAsO₂), et ensuite la réaction du produit métaarseniate de lithium avec du fluorure d'ammonium pendant environ 4 heures pour obtenir de l'hexafluoroarseniate de lithium.

4. Procédé selon la revendication 3 dans lequel la source de lithium, le trioxyde d'arsenic et le fluorure d'ammonium sont utilisés dans un rapport de 1:1:6-9.

5. Procédé selon la revendication 1 dans lequel la réaction est effectuée en une seule étape thermique comprenant le mélange d'une source de lithium choisie dans le groupe constitué de LiOH, de Li₂O, de Li₂CO₃ et de LiNO₃ avec une quantité équimolaire de trioxyde d'arsenic (As₂O₃) et 6 à 9 fois le poids moléculaire en fluorure d'ammonium, le chauffage du mélange solide dans un four électrique à une température dans la plage de 150-300°C pendant 4 heures pour obtenir le produit désiré.

6. Procédé selon la revendication 1 dans lequel le sel de lithium et le trioxyde d'arsenic (As₂O₃) et le fluorure d'ammonium sont mélangés dans un rapport de 1:1:6-9, chauffés dans un four électrique en continu pendant 4 heures à une température dans la plage de 150-300°C pour obtenir du tétrafluoroarseniate de lithium confirmé par analyse aux rayons X.

7. Procédé selon la revendication 1 dans lequel LiOH ou Li₂O ou Li₂CO₃ ou LiNO₃ est mélangé avec le trioxyde d'arsenic dans un rapport de 1:1 pour arriver à obtenir LiAsO₂.

8. Procédé selon la revendication 7 dans lequel le LiAsO₂ obtenu est mélangé avec NH₄F dans un rapport de 1:6-9.

9. Procédé selon la revendication 1 dans lequel un four électrique est utilisé pour préparer le produit intermédiaire LiAsO₂ ou le produit final LiAsF₆.

10. Procédé selon la revendication 1 dans lequel la température va de la température ambiante à 300°C.

11. Procédé selon la revendication 1 dans lequel dans la préparation de LiAsF₆ le produit intermédiaire LiAsO₂ est préparé à une température dans la plage de 200-600°C.

12. Procédé de préparation d'hexafluoroarseniate de lithium comprenant le mélange d'une source de lithium choisie dans le groupe constitué de LiOH, de Li₂O, de Li₂CO₃ et de LiNO₃ avec une quantité équimolaire de trioxyde d'arsenic (As₂O₃) et 6 à 9 fois le poids moléculaire en fluorure d'ammonium, le chauffage du mélange solide dans un four électrique à une température dans la plage de 150-300°C pendant 4 heures pour obtenir le produit désiré.

13. Procédé selon la revendication 12 dans lequel la source de lithium est choisie dans le groupe constitué de LiOH, de Li₂O, de LiNO₃ et de Li₂CO₃.

14. Procédé de préparation d'hexafluoroarseniate de lithium comprenant d'abord le mélange d'une source de lithium avec du trioxyde d'arsenic en proportions équimolaires et un lent chauffage dans un four électrique initialement à 100°C puis en continu pendant 4 heures à une température dans la plage de 200-300°C pour obtenir du métaarseniate de lithium (LiAsO₂), et ensuite la réaction du produit métaarseniate de lithium avec du fluorure d'ammonium pendant environ 4 heures, pour obtenir de l'hexafluoroarseniate de lithium.

15. Procédé selon la revendication 14 dans lequel le fluorure d'ammonium est utilisé en une quantité de 6 à 9 fois la quantité de trioxyde d'arsenic.

16. Procédé selon la revendication 14 dans lequel la source de lithium est choisie dans le groupe constitué de LiOH, de Li₂O, de LiNO₃ et de Li₂CO₃.

## Patentansprüche

1. Verfahren zur Herstellung von Lithiumhexafluoroarsenat, umfassend das Inkontaktbringen von Arsentrioxid mit einer Lithiumquelle und Ammoniumfluorid, wobei alle im festen Zustand sind, und das Erhitzen, um Lithiumhexafluoroarsenat zu gewinnen.

2. Verfahren nach Anspruch 1, wobei die Lithiumquelle aus der Gruppe bestehend aus LiOH, Li₂O, LiNO₃ und Li₂CO₃ ausgewählt wird.

3. Verfahren nach Anspruch 1, wobei das Verfahren in einem einzigen Schritt durchgeführt wird, umfassend das Mischen der Lithiumquelle mit einer äquimolaren Menge von Arsentrioxid und das langsame Erhitzen in einem Elektroofen auf anfangs 100°C und dann kontinuierlich für 4 Stunden bei einer Temperatur im Bereich von 200-300°C, um Lithiummetaarsenat (LiAsO₂) zu gewinnen, und zweitens das Reagieren des Lithiummetaarsenat-Produkts mit Ammoniumfluorid für ungefähr 4 Stunden, um Lithiumhexafluoroarsenat zu gewinnen.

4. Verfahren nach Anspruch 3, wobei die Lithiumquelle, das Arsentrioxid und das Ammoniumfluorid in einem Verhältnis von 1:1:6-9 verwendet werden.

5. Verfahren nach Anspruch 1, wobei die Reaktion in einem einzigen thermischen Schritt durchgeführt wird, umfassend das Mischen einer Lithiumquelle, die aus der Gruppe bestehend aus LiOH, Li₂O, Li₂CO₃ und LiNO₃ ausgewählt wird, mit einer äquimolaren Menge von Arsentrioxid (As₂O₃) und dem 6- bis 9-fachen Molekulargewicht Ammoniumfluorid, und das Erhitzen der festen Mischung in einem Elektroofen bei einer Temperatur im Bereich von 150-300°C für 4 Stunden, um das gewünschte Produkt zu gewinnen.

6. Verfahren nach Anspruch 1, wobei das Lithiumsalz und Arsentrioxid (As₂O₃) und Ammoniumfluorid in einem Verhältnis von 1:1:6-9 gemischt werden und in einem Elektroofen kontinuierlich für 4 Stunden bei einer. Temperatur im Bereich von 150-300°C erhitzt werden, um Lithiumtetrafluoroarsenat zu gewinnen, das durch Röntgenanalyse nachgewiesen wird.

7. Verfahren nach Anspruch .1, wobei LiOH oder Li₂O oder Li₂CO₃ oder LiNO₃ mit Arsentrioxid im Verhältnis von 1:1 gemischt wird, um LiAsO₂ zu gewinnen.

8. Verfahren nach Anspruch 7, wobei das gewonnene LiAsO₂ mit NH₄F in einem Verhältnis von 1:6-9 gemischt wird.

9. Verfahren nach Anspruch 1, wobei ein Elektroofen verwendet wird, um das Zwischenprodukt LiAsO₂ oder das Endprodukt LiAsF₆ herzustellen.

10. Verfahren nach Anspruch 1, wobei die Temperatur von Raumtemperatur bis 300°C beträgt.

11. Verfahren nach Anspruch 1, wobei bei der Herstellung von LiAsF₆ das Zwischenprodukt LiAsO₂ bei einer Temperatur im Bereich von 200-600°C hergestellt wird.

12. Verfahren zur Herstellung von Lithiumhexafluoroarsenat, umfassend das Mischen einer Lithiumquelle, die aus der Gruppe bestehend aus LiOH, Li₂O, Li₂CO₃ und LiNO₃ ausgewählt wird, mit einer äquimolaren Menge von Arsentrioxid (As₂O₃) und dem 6- bis 9-fachen Molekulargewicht Ammoniumfluorid, und das Erhitzen der festen Mischung in einem Elektroofen bei einer Temperatur im Bereich von 150-300°C für 4 Stunden, um das gewünschte Produkt zu gewinnen.

13. Verfahren nach Anspruch 12, wobei die Lithiumquelle aus der Gruppe bestehend aus LiOH, Li₂O, LiNO₃ und Li₂CO₃ ausgewählt wird.

14. Verfahren zur Herstellung von Lithiumhexafluoroarsenat, umfassend zuerst das Mischen einer Lithiumquelle mit Arsentrioxid in äquimolarem Verhältnis und das langsame Erhitzen in einem Elektroofen auf anfangs 100°C und dann kontinuierlich für 4 Stunden bei einer Temperatur im Bereich von 200-300°C, um Lithiummetaarsenat (LiAsO₂) zu gewinnen, und zweitens das Reagieren des Lithiummetaarsenat-Produkts mit Ammoniumfluorid für ungefähr 4 Stunden, um Lithiumhexafluoroarsenat zu gewinnen.

15. Verfahren nach Anspruch 14, wobei das Ammoniumfluorid in einer Menge verwendet wird, die das 6- bis 9-fache der Menge von Arsentrioxid beträgt.

16. Verfahren nach Anspruch 14, wobei die Lithiumquelle aus der Gruppe bestehend aus LiOH, Li₂O, LiNO₃ und Li₂CO₃ ausgewählt wird.
